# EUROPEAN PATENT SPECIFICATION

(11) **EP 2 176 908 B1**
(45) Date of publication and mention of the grant of the patent: **08.06.2011**
(21) Application number: 08791848.8
(22) Date of filing: 23.07.2008
(51) Int. Cl.: H01M 4/86, H01M 4/90, H01M 4/92, B01J 23/28, B01J 23/46, B01J 23/86

(54) **FUEL CELL ELECTRODE CATALYST, METHOD FOR EVALUATING PERFORMANCE OF OXYGEN-REDUCING CATALYST, AND SOLID POLYMER FUEL CELL COMPRISING THE FUEL CELL ELECTRODE CATALYST**
BRENNSTOFFZELLENELEKTRODENKATALYSATOR ZUR BEURTEILUNG DER LEISTUNG EINES SAUERSTOFFREDUZIERENDEN KATALYSATORS UND FESTPOLYMERBRENNSTOFF MIT DEM BRENNSTOFFZELLENELEKTRODENKATALYSATOR
CATALYSEUR D'ÉLECTRODE DE PILE À COMBUSTIBLE, PROCÉDÉ D'ÉVALUATION DE LA PERFORMANCE D'UN CATALYSEUR DE RÉDUCTION D'OXYGÈNE, ET PILE À COMBUSTIBLE POLYMÈRE SOLIDE COMPRENANT LE CATALYSEUR D'ÉLECTRODE DE PILE À COMBUSTIBLE

(30) Priority: 24.07.2007 JP 2007192443
(43) Date of publication of application: 21.04.2010
(73) Proprietor: Toyota Jidosha Kabushiki Kaisha, Toyota-shi, Aichi 471-8571 (JP)
(72) Inventor: UENO, Yukiyoshi, Toyota-shi Aichi 471-8571 (JP); IISAKA, Hirofumi, Toyota-shi Aichi 471-8571 (JP)
(74) Representative: Kuhnen & Wacker
(86) International application number: PCT/JP2008/063615
(87) International publication number: WO 2009/014250

(56) References cited:
- EP-A- 1 750 318
- EP-A- 1 772 916
- EP-A- 1 786 053
- WO-A-2006/137302
- DE-A1- 19 644 628
- US-A1- 2004 096 728
- US-A1- 2007 078 052

## Description

### Technical Field

The present invention relates to a fuel cell electrode catalyst comprising ruthenium and sulfur, wherein the value of (ruthenium-sulfur coordination number)/(ruthenium-ruthenium coordination number) is 0.9 to 2.5, a method for producing it and a solid polymer fuel cell comprising such fuel cell electrode catalyst.

### Background Art

Anode catalysts used for polymer electrolyte fuel cells are mainly platinum and platinum-alloy-based catalysts. Specifically, catalysts in which a platinum-containing noble metal is supported by carbon black have been used. In terms of practical applications of polymer electrolyte fuel cells, one problem relates to the cost of materials. A means to solve such problem involves reduction in the platinum content.

Meanwhile, it has been known that when oxygen (O₂) is electrolytically reduced, superoxide is generated as a result of one-electron reduction, hydrogen peroxide is generated as a result of two-electron reduction, or water is generated as a result of four-electron reduction. When voltage reduction occurs for some reason in a fuel cell stack using, as an electrode, a platinum or platinum-based catalyst, four-electron reduction performance deteriorates, resulting in two-electron reduction. Accordingly, hydrogen peroxide is generated, causing MEA deterioration.

Recently, low-cost fuel cell catalysts have been developed via a reaction that produces water as a result of four-electron reduction of oxygen, which will result in elimination of the need for expensive platinum catalysts.

Non-Patent Document 1 described below discloses that a catalyst comprising a chalcogen element is excellent in terms of four-electron reduction performance and suggests that such catalyst be applied to fuel cells.

Likewise, Patent Document 1 described below discloses, as a platinum (Pt) catalyst substitute, an electrode catalyst comprising at least one transition metal and a chalcogen. An example of a transition metal is Ru and an example of a chalcogen is S or Se. It is also disclosed that, in such case, the Ru : Se molar ratio is from 0.5:1 to 2:1 and the stoichiometric number "n" of (Ru)nSe is 1.5 to 2.

Further, Patent Document 2 described below discloses, as a Pt catalyst substitute, a fuel cell catalyst material comprising a transition metal that is either Fe or Ru, an organic transition metal complex containing nitrogen, and a chalcogen component such as S.

In addition, Non-Patent Document 1 described below discloses an Mo-Ru-Se ternary electrode catalyst and a method for synthesizing the same.

Further, Non-Patent Document 2 described below discloses Ru-S, Mo-S, and Mo-Ru-S binary and ternary electrode catalysts and methods for synthesizing the same.

Furthermore, Non-Patent Document 3 described below discloses Ru-Mo-S and Ru-Mo-Se ternary chalcogenide electrode catalysts.
Patent Document 1: JP Patent Publication (Kohyo) No. 2001-502467 A
Patent Document 2: JP Patent Publication (Kohyo) No. 2004-532734 A
Non-Patent Document 1: Electrochimica Acta, vol. 39, No. 11/12, pp. 1647-1653, 1994
Non-Patent Document 2: J. Chem. Soc., Faraday Trans., 1996, 92 (21), 4311-4319
Non-Patent Document 3: Electrochimica Acta, vol. 45, pp. 4237-4250, 2000 Patent document 3 (US2004096728) discloses a RuSe catalyst for a fuel cell, wherein Ru can be replaced by Mo, Fe, Co, Ni or W and Se can be replaced by S, said fuel cell being a PEM fuel cell. The catalyst is prepared by dissolving Se and Ru(CO)₁₂, obtaining a precipitate and heating to a temperature of 600°C under inert atmosphere.
Patent document document 4 (EP1772916) discloses a cathode catalyst for a PEM fuel cell comprising a material M selected from Ru, Rh and combinations thereof and a material Ch selected from S, Se, Te and combinations thereof. The catalyst can be prepared by mixing ruthenium carbonyl and sulfur, heating from 100°C to 170°C, filtering, drying and heat treating at 200°C to 250°C under nitrogen atmosphere.
Patent document 5 (EP1786053) discloses a cathode catalyst for a PEM fuel cell, said catalyst including Ru-Se. The catalyst can be prepared by mixing ruthenium carbonyl and Se, performing two heat treatments at temperatures of 100°C to 450°C.
Patent document 6 (EP1750318) discloses a cathode catalyst for a PEM fuel cell, said catalyst including Ru, M and Te, wherein M is Mo, W or a mixture thereof. The catalyst can be prepared by mixing ruthenium carbonyl, molybdenum carbonyl and Te, heating at 140°C to 350°C and firing at 200°C.

### Disclosure of the Invention

Problem to be solved by the Invention

The catalysts disclosed in Patent Documents 1-6 and Non-Patent Documents 1, 2, and 3 are insufficient in terms of four-electron reduction performance. Therefore, the development of high-performance catalysts and of an index for performance evaluation that is useful for high-performance catalyst design has been awaited.

### Means for Solving Problem

The present inventors have found that, in the case of a fuel cell electrode catalyst comprising ruthenium and sulfur the ratio of the coordination number of one element to that of the other is closely related to the oxygen reduction performance of such catalyst. Further, they have found that the above problem can be solved by designating the coordination number ratio as an index for performance evaluation that is useful for catalyst design. This has led to the completion of the present invention.

Specifically, in a first aspect, the present invention relates to a fuel cell electrode catalyst comprising ruthenium and sulfur, characterized in that the value of ruthenium-sulfur coordination number) / ruthenium-ruthenium coordination number) is 0.9 to 2.5.

Herein, the ruthenium-sulfur coordination number" and the ruthenium-ruthenium coordination number" of an electrode catalyst are determined not only based on the composition ratio of ruthenium to sulfur but also based on the nature of a crystal of catalyst particles comprising both elements, the particle size thereof, and the like. In addition, it is possible to change crystallographic activity, particle-size-dependent activity, and the like of such catalyst particles mainly based on conditions of baking after catalyst preparation.

In a second aspect, the present invention relates to a solid polymer fuel cell comprising the above fuel cell electrode catalyst.

### Effects of the Invention

The fuel cell electrode catalyst of the present invention has a higher level of four-electron reduction performance and higher activity than a conventional transition metal-chalcogen element-based catalyst, and thus it can serve as a platinum catalyst substitute.

In addition, the technique for obtaining the value of (ruthenium-sulfur coordination number) / (ruthenium-ruthenium coordination number) used in the present invention is widely useful in the design of oxygen-reducing catalysts.

### Brief Description of the Drawings

Fig. 1 shows structural analysis results for Ru-containing chalcogenide obtained via EXAFS.
Fig. 2A, 2B, 2C show TEM images (fig. 2A, 2B) of an Ru-S portion of Ru-containing chalcogenide obtained via TEM and an X-ray diffraction image (fig. 2C) of the Ru-S portion.
Fig. 3A, 3B, 3C show TEM images (fig. 3A, 3B) of an Ru-Ru portion of Ru-containing chalcogenide obtained via TEM and an X-ray diffraction image (fig. 3C) of the Ru-Ru portion.
Fig. 4 shows structural analysis results for Ru-containing chalcogenide (sulfur content: 20%) obtained via EXAFS.
Fig. 5 shows structural analysis results for Ru-containing chalcogenide (sulfur content: 45%) obtained via EXAFS.
Fig. 6 shows structural analysis results for Ru-containing chalcogenide (sulfur content: 71%) obtained via EXAFS.
Fig. 7 shows results obtained by a rotating ring-disk electrode (RDE) evaluation method whereby the above catalyst materials having different sulfur contents were evaluated in relation to the oxygen reduction performance of Ru-containing chalcogenide.
Fig. 8 shows the correlation between the value of Ru sulphide (Ru-S) / Ru metal component (Ru-Ru) and the oxygen reduction current value.

### Best Mode for Carrying Out the Invention

Hereinafter, the present invention is described in more detail with reference to the Examples and the Comparative Examples.

### [Catalyst preparation]

Ruthenium carbonyl, molybdenum carbonyl, and sulfur were heated at 140°C in the presence of argon, followed by cooling. Thereafter, the resultant was washed with acetone and filtered. The obtained filtrate containing RuMoS/C (Ru : Mo : S = 5:1:5; 60 wt%) was baked at 350°C for 2 hours. Thus, a catalyst was prepared.

### [Structural analysis]

The above catalyst material was subjected to structural analysis via EXAFS and TEM.

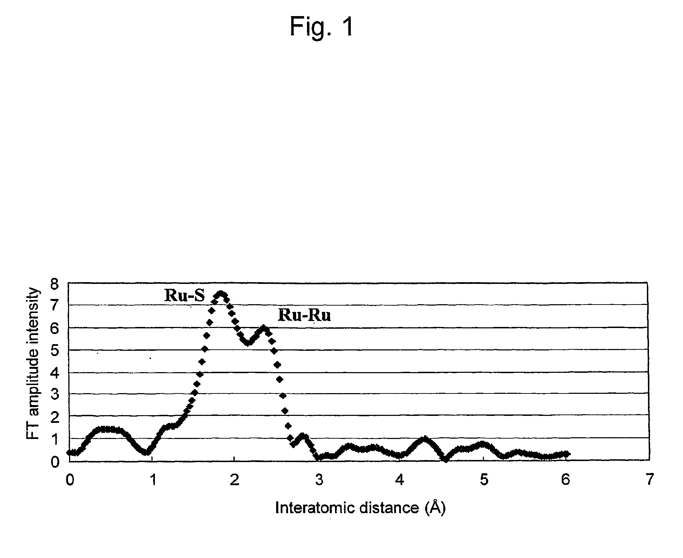

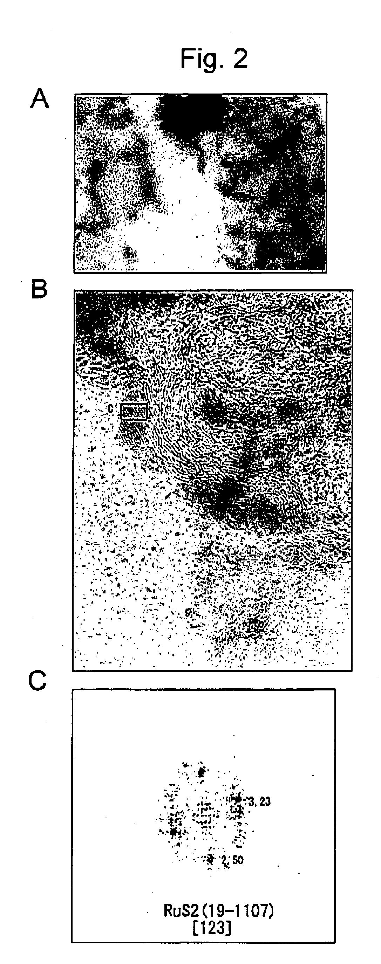

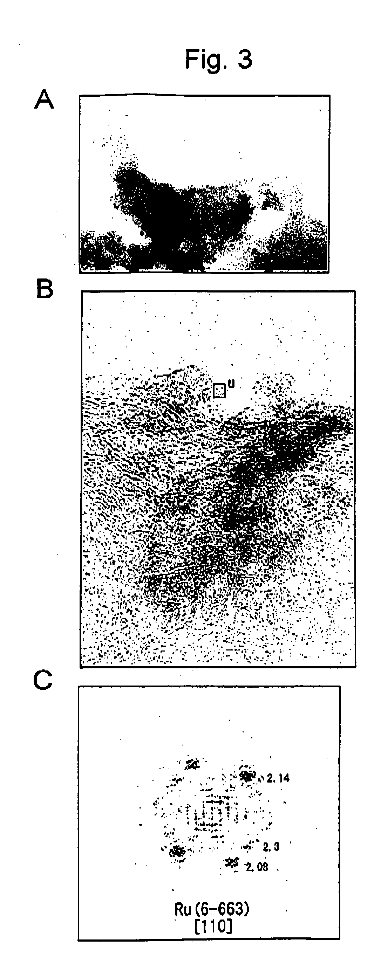

Fig. 1 shows structural analysis results for Ru-containing chalcogenide obtained via EXAFS (extend X-ray absorption fine structure). Fig. 2A, 2B, 2C show TEM images (fig. 2A, 2B) of an Ru-S portion in Ru-containing chalcogenide obtained via TEM and an X-ray diffraction image (fig. 2C) of the Ru-S portion. Likewise, fig. 3A, 3B, 3C show TEM images (fig. 3A, 3B) of an Ru-Ru portion of Ru-containing chalcogenide obtained via TEM and an X-ray diffraction image (fig. 3C) of the Ru-Ru portion.

As a result of structural analysis via EXAFS and TEM, Ru-containing chalcogenide was found to comprise an Ru sulphide (Ru-S) and an Ru metal component (Ru-Ru).

### [Structural analysis and performance evaluation of catalyst materials with different S contents]

Catalyst materials were prepared in the same manner as that described above, provided that each material had a different sulfur content (0, 20, 45, or 71 mol%).

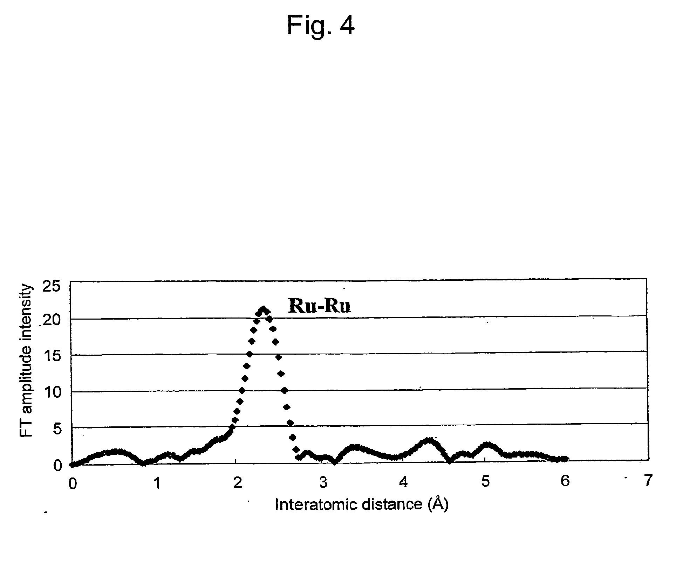

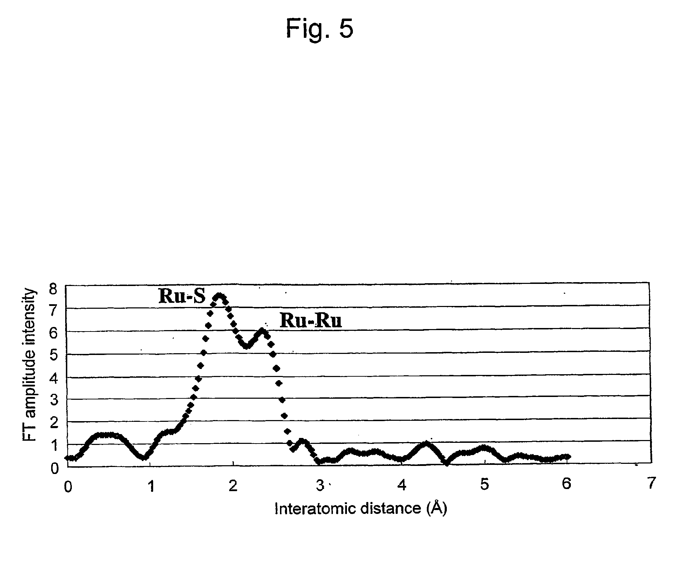

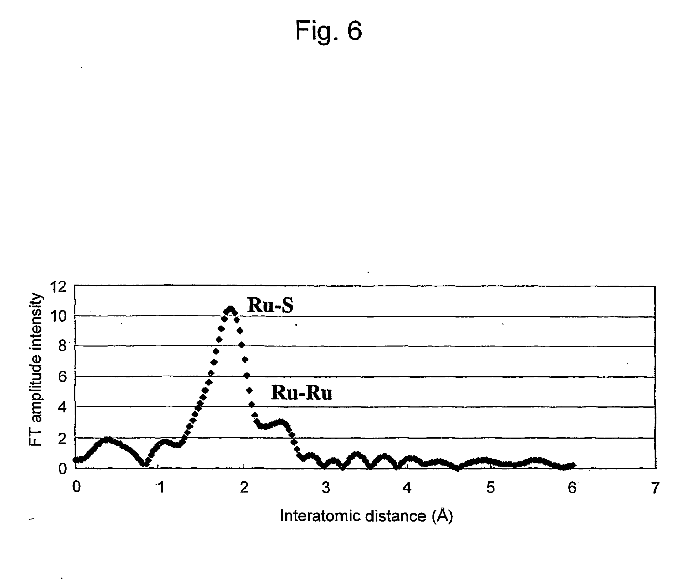

Fig. 4 shows structural analysis results for Ru-containing chalcogenide (sulfur content: 20%) obtained via EXAFS. The results of fig. 4 indicate the exclusive presence of Ru-Ru bonds. Fig. 5 shows structural analysis results for Ru-containing chalcogenide (sulfur content: 45%) obtained via EXAFS. The results of fig. 5 indicate the presence of Ru-S bonds and of Ru-Ru bonds. Fig. 6 shows structural analysis results for Ru-containing chalcogenide (sulfur content: 71%) obtained via EXAFS. The results of fig. 6 indicate the presence of many Ru-S bonds and of a small number of Ru-Ru bonds.

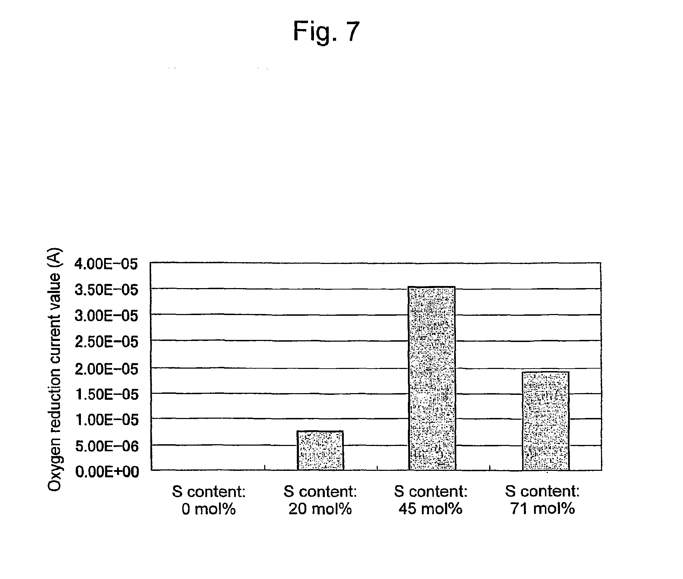

Fig. 7 shows results obtained by a rotating disk electrode (RDE) evaluation method whereby the above catalyst materials having different sulfur contents were evaluated in relation to the oxygen reduction performance of Ru-containing chalcogenide.

The correlation between the following factors was examined: the proportion of the coordination number of the Ru sulphide (Ru-S) to that of the Ru metal component (Ru-Ru) obtained from figs. 4 to 6; and the results of oxygen reduction performance evaluation obtained from fig. 7. Herein, regarding the Ru sulphide (Ru-S) and the Ru metal component (Ru-Ru), Fourier transform amplitudes of Ru-S bonds and Ru-Ru bonds shown in figs. 4 to 6 were calculated to derive the coordination numbers thereof.

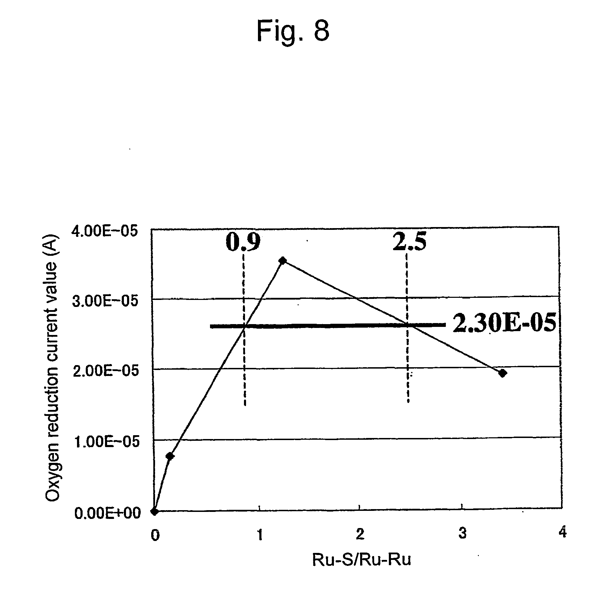

Fig. 8 shows the correlation between the value of Ru sulphide (Ru-S)/Ru metal component (Ru-Ru) and the oxygen reduction current value. Based on the results shown in fig. 8, it is understood that an excellent oxygen-reducing catalyst is obtained when the value of (transition metal element-chalcogen element coordination number) / (transition metal element-transition metal element coordination number) is 0.9 to 2.5.

### Industrial Applicability

The fuel cell electrode catalyst of the present invention has a high level of four-electron reduction performance and high activity, and thus it can serve as a platinum catalyst substitute. In addition, the technique for obtaining the value of (ruthenium-sulfur coordination number) / ruthenium-ruthenium coordination number) used in the present invention is widely useful in the design of oxygen-reducing catalysts. Therefore, the present invention contributes to the practical and widespread use of fuel cells.

## Claims

1. A fuel cell electrode catalyst comprising ruthenium and sulfur, wherein the value of (ruthenium- sulfur coordination number) / (ruthenium- ruthenium coordination number) is 0.9 to 2.5.

2. A solid polymer fuel cell, which comprises the fuel cell electrode catalyst according to claim 1.

3. A method for manufacturing a fuel cell electrode catalyst comprising ruthenium and sulfur, which comprises a step of selecting a composition of the catalyst and a step of baking so as to adjust the value of (ruthenium- sulfur coordination number) / (ruthenium-ruthenium, coordination number) in the range of 0.9 to 2.5.

## Patentansprüche

1. Elektrodenkatalysator für eine Brennstoffzelle, der Ruthenium und Schwefel aufweist, wobei der Wert von (Ruthenium-Schwefel-Koordinationszahl) / (Ruthenium-Ruthenium-Koordinationszahl) 0,9 bis 2,5 ist.

2. Festpolymer-Brennstoffzelle, die einen Elektrodenkatalysator für eine Brennstoffzelle nach Anspruch 1 aufweist.

3. Verfahren zum Herstellen eines Ruthenium und Schwefel aufweisenden Elektrodenkatalysators für eine Brennstoffzelle, einen Auswahlschritt für eine Zusammensetzung des Katalysators und einen Brennschritt umfassend, um den Wert von (Ruthenium-Schwefel-Koordinationszahl) / (Ruthenium-Ruthenium-Koordinationszahl) auf einen Bereich von 0,9 bis 2,5 einzustellen.

## Revendications

1. Catalyseur d'électrode de pile à combustible comprenant du ruthénium et du soufre, dans lequel la valeur du rapport (nombre de coordination ruthénium-soufre)/(nombre de coordination ruthénium-ruthénium) est de 0,9 à 2,5.

2. Pile à combustible à polymère solide, qui comprend le catalyseur d'électrode de pile à combustible selon la revendication 1.

3. Procédé de fabrication d'un catalyseur d'électrode de pile à combustible comprenant du ruthénium et du soufre, qui comprend une étape de sélection d'une composition du catalyseur et une étape de cuisson de manière à ajuster la valeur du rapport (nombre de coordination ruthénium-soufre)/(nombre de coordination ruthénium-ruthénium) dans la plage de 0,9 à 2,5.
